(19) Europäisches Patentamt

European Patent Office

Office européen des brevets

(11) **EP 0 745 838 B1**

(12) **EUROPÄISCHE PATENTSCHRIFT**

(45) Veröffentlichungstag und Bekanntmachung des Hinweises auf die Patenterteilung:
**05.02.2003 Patentblatt 2003/06**

(51) Int Cl.⁷: $G01N\ 21/00$, G01N 21/53, G01S 7/481

(21) Anmeldenummer: **95108334.4**

(22) Anmeldetag: **31.05.1995**

(54) **Sichtweitenmessgerät**

Visual range measuring device

Dispositif pour mesurer la visibilité

(84) Benannte Vertragsstaaten:
**CH DE FR GB LI NL**

(43) Veröffentlichungstag der Anmeldung:
**04.12.1996 Patentblatt 1996/49**

(73) Patentinhaber: **Vaisala Impulsphysik GmbH**
**22525 Hamburg (DE)**

(72) Erfinder: **Heyn, Klaus**
**D-20257 Hamburg (DE)**

(74) Vertreter: **Oehmke, Volker, Dipl.-Math. et al**
**Patentanwälte Oehmke & Kollegen,**
**Neugasse 13**
**07743 Jena (DE)**

(56) Entgegenhaltungen:
**DE-A- 2 145 585　　　　US-A- 3 872 315**

**Beschreibung**

Die Erfindung betrifft Sichtweitenmeßgeräte mit Sender und Empfänger sowie die erforderlichen optischen Einrichtungen sowie Auswerteeinrichtungen.

In derartige Sichtweitenmeßgeräte sind grundsätzlich Fenster zum Schutz der Optik und Elektronik eingesetzt. Die Verschmutzung der Fenster ist ein beständiges Problem. Gerade an Flughäfen kommt es darauf an, trotz der dort verstärkt anfallenden Verschmutzung durch Flugzeugabgase Sichtweiten zuverlässig sich zu bestimmen.

Dieser Aufgabe dient die vorliegende Erfindung. Es ist vorgesehen, bei einem Sichtweitenmeßgerät mit einem oder mehreren Fenstern und mit wenigstens einem Hauptstrahlengang, welcher der Durchstrahlung beziehungsweise Beleuchtung der Atmosphäre dient, Fenster so anzuordnen, daß sie jeweils wenigstens zwei zueinander im Winkel stehende oder abwinkelbare Abschnitte aufweisen und diese von einem zusätzlichen Sende- und Empfangsstrahlengang beleuchtet werden. Dieser zusätzliche Strahlengang dient von seiner Funktion her als Referenzstrahlengang zur Bestimmung der Scheibenverschmutzung. Mit dem Referenzstrahlengang erfolgt keine Durchstrahlung der Atmosphäre. Die Bezeichnung zusätzlicher Strahlengang ist hier nur zur Erläuterung beziehungsweise als Abgrenzung zum Hauptstrahlengang aufgeführt. Dies heißt nicht, daß notwendigerweise gleichzeitig ein Hauptstrahlengang zur Durchstrahlung der Atmosphäre und ein Referenzstrahlengang zur Bestimmung der Scheibenverschmutzung angeordnet sein muß. Vielmehr kann durch Drehen der Sende- und Empfangseinrichtung für den Hauptstrahlengang dieselbe als Referenzstrahlengang zur Bestimmung der Scheibenverschmutzung benutzt werden. Anstelle der Drehung des Hauptstrahlenganges ist auch eine Drehung der Scheiben in diesem Strahlengang möglich. Es kommt lediglich darauf an, daß gleichzeitig oder in zeitlicher Aufeinanderfolge die Durchstrahlung der Atmosphäre und die Referenzmessung zur Bestimmung der Scheibenverschmutzung erfolgt.

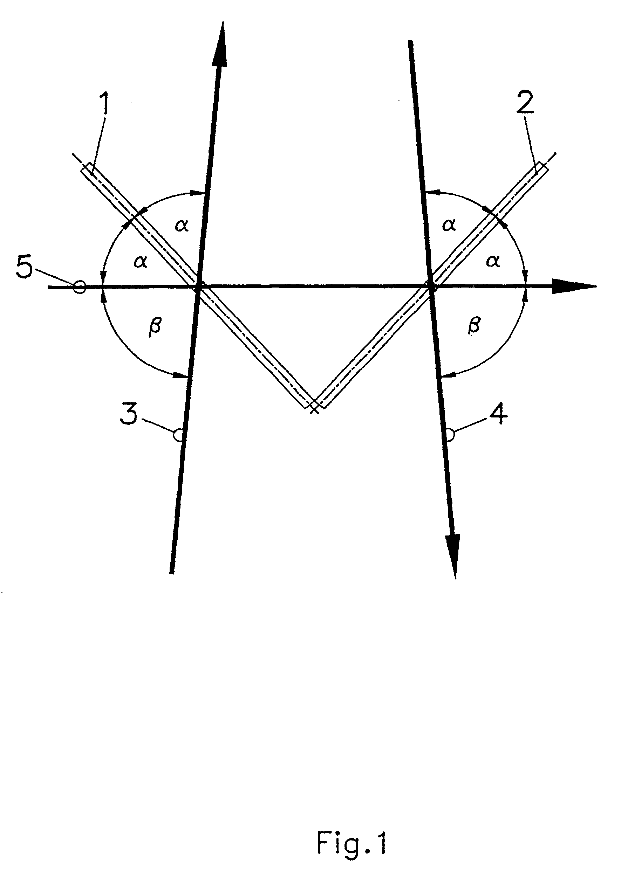

Zur Veranschaulichung wird auf die Figur 1 verwiesen. Das Fenster besteht hier aus den abgewinkelten Abschnitten 1, 2. Der Hauptstrahl 3 kommt von einem Sender und durchstrahlt die Atmosphäre. In diesem Beispiel wird ein von der Atmosphäre rückgestreuter Strahl 4 empfangen. Durch Klappen der Sender für den Hauptstrahl 3 beziehungsweise des Empfängers 4 wird der Hauptstrahl zum Referenzstrahl 5. Hinsichtlich des Winkels zwischen den abgewinkelten Abschnitten 1 und 2 des Fensters kommt es lediglich darauf an, die Durchstrahlung in Richtung des Referenzstrahles zu ermöglichen. In Abhängigkeit von den geometrischen Gegebenheiten, wie zum Beispiel Größe von Sender und Empfänger, wird der Winkel zwischen den Abschnitten 1 und 2 geeignet eingestellt. Bevorzugt sind die Abschnitte 1 und 2 zu den Hauptstrahlen 3 und 4 so angeordnet, daß der Winkel zwischen 1 und 3 dem Winkel zwischen 2 und 4 entspricht. Dadurch wird sichergestellt, daß die Ablagerungen auf beiden Fenstern sowohl für den ausgesendeten als auch den empfangenden Strahl unter dem gleichen Winkel beleuchtet werden. Weiter bevorzugt ist der Winkel zwischen 1 und 5 genauso groß wie der Winkel zwischen 1 und 3. Entsprechendes gilt für den Abschnitt 2. Es ist ferner bevorzugt, daß der Referenzstrahl 5 auf den abgewinkelten Abschnitten 1 und 2 im wesentlichen die gleiche Fläche beleuchtet wie der Hauptstrahlengang 3, 4.

Nach einer bevorzugten Ausführung ist neben dem Hauptstrahlengang ein Referenzstrahlengang angeordnet. Dabei sind die abgewinkelten Abschnitte des Fensters in der Winkelhalbierenden zwischen Hauptstrahl und Referenzstrahl ausgerichtet. Der Referenzstrahl weist also einen eigenen Sender und einen eigenen Empfänger auf.

Nach einer weiter bevorzugten Ausführung ist sowohl für den gesendeten als auch den empfangenden Hauptstrahl jeweils ein Fenster mit abgewinkelten Abschnitten vorgesehen. Dabei weist jedes der Fenster seinen eigenen Referenzstrahlengang auf. Dies hat den Vorteil, daß zwischen den beiden Fenstern eine Blende vorgesehen werden kann, mit der ein optisches Übersprechen zwischen den abgewinkelten Abschnitten vermieden wird.

Nach der Ausführungsform der Erfindung gemäß Anspruch 2 sind für den gesendeten und empfangenen Hauptstrahl jeweils ein Fenster mit abgewinkelten Abschnitten vorgesehen, und es ist für beide Fenster ein gemeinsamer Referenzstrahlengang angeordnet, für die beiden Fenster nur ein Sender und ein Empfänger gemeinsam benötigt wird. Dazu ist zwischen den beiden Fenstern ein Filter vorgesehen, der schmalbandig nur die Wellenlänge des Referenzstrahles durchläßt. Der Hauptstrahl geht senderseitig dabei durch einen der abgewinkelten Abschnitte und empfangsseitig durch den zweiten abgewinkelten Abschnitt.

Bevorzugt wird der Hauptstrahl im Bereich sichtbaren Lichtes ausgesendet, während als Referenz eine Strahlung im infraroten Bereich vorgesehen ist.

Nach einer weiter bevorzugten Ausführung beträgt der Winkel zwischen den abgewinkelten Abschnitten des Fensters 90 Grad. Nach einer speziellen Ausführung wird der Referenzstrahlengang so ausgelegt, daß integral die Verschmutzung der gesamten wirksamen Fläche der abgewinkelten Bereiche erfaßt wird.

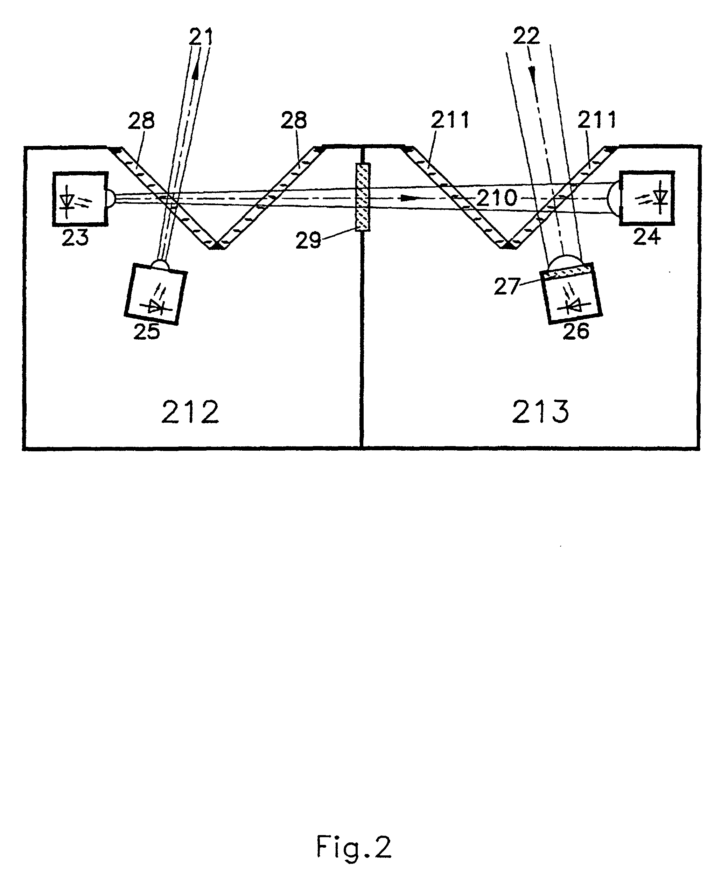

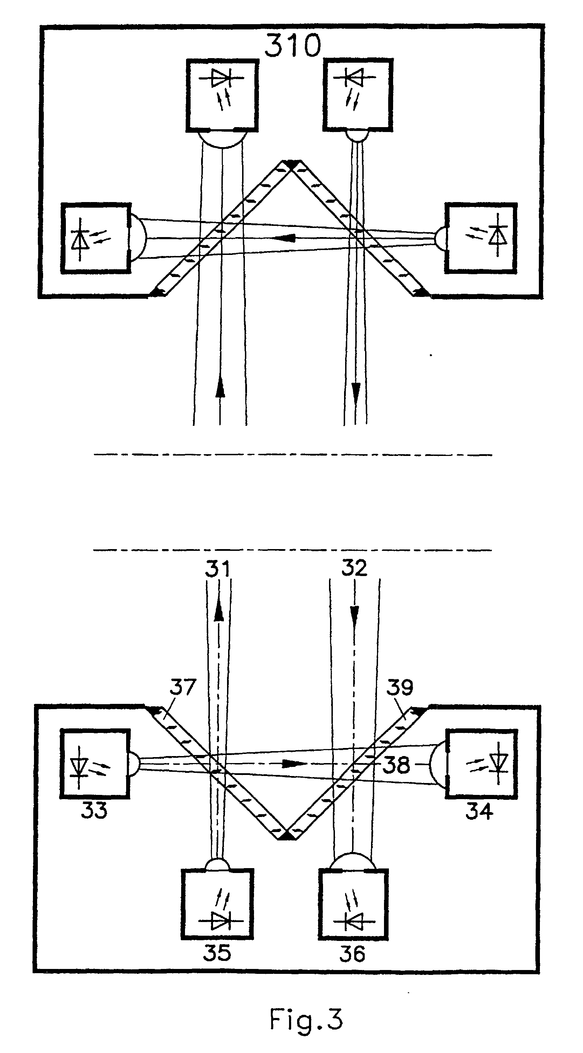

Anhand von den Figur 2 und 3 dargestellten Ausführungsbeispielen wird die Erfindung näher erläutert.

In Figur 2 bedeuten:

21) Lichtkegel Hauptsender
22) Gesichtsfeld Hauptempfänger
23) Referenzsender mit Optik, Wellenlänge 870 nm,
Intensität geregelt und moduliert

24) Referenzempfänger mit Optik, Photodiode, Signalverarbeitung

25) Hauptsender mit Optik, Wellenlänge 650 nm, Intensität geregelt und moduliert

26) Hauptempfänger mit Opti, optischem Schmalbandfilter (27),

Photodiode und Signalverarbeitung

27) Optischer Schmalbandfilter 650 nm

28) Senderseitige Gerätescheiben, unter 90 °-Winkel angeordnet

29) Optischer Schmalband- oder Tageslichtfilter 870 nm

210) Referenzmeßstrahl

211) Empfängerseitige Gerätescheiben, unter 90 °-Winkel angeordnet

212) Senderseitiges Gehäuseteil, optisch vollständig von der Empfängerseite isoliert. Kein optisches Übersprechen, einzige Verbindung über Filter 29) bei Wellenlänge ≥ 870 nm

213) Empfängerseitiges Gehäuseteil, optisch vollständig von der Senderseite isoliert

In Figur 3 bedeuten:

31) Lichtkegel Hauptsender

32) Gesichtsfeld Hauptempfänger

33) Referenzsender mit Optik, Intensität geregelt und moduliert

34) Referenzempfänger mit Optik, Photodiode, Signalverarbeitung

35) Hauptsender mit Optik, Intensität geregelt und moduliert

36) Hauptempfänger mit Optik, Photodiode, Signalverarbeitung

37) Senderseitige Gerätescheibe, unter 45 °-Winkel zur Hauptstrahlrichtung angeordnet

38) Referenzmeßstrahl

39) Empfängerseitige Gerätescheibe, unter 45 °-Winkel zur Hauptstrahlrichtung angeordnet

310) In der typischen Anordnung gegenüberliegender Geräteteil mit identischem Aufbau.
Typische Distanz 50 m oder 75 m zwischen den beiden Geräteteilen

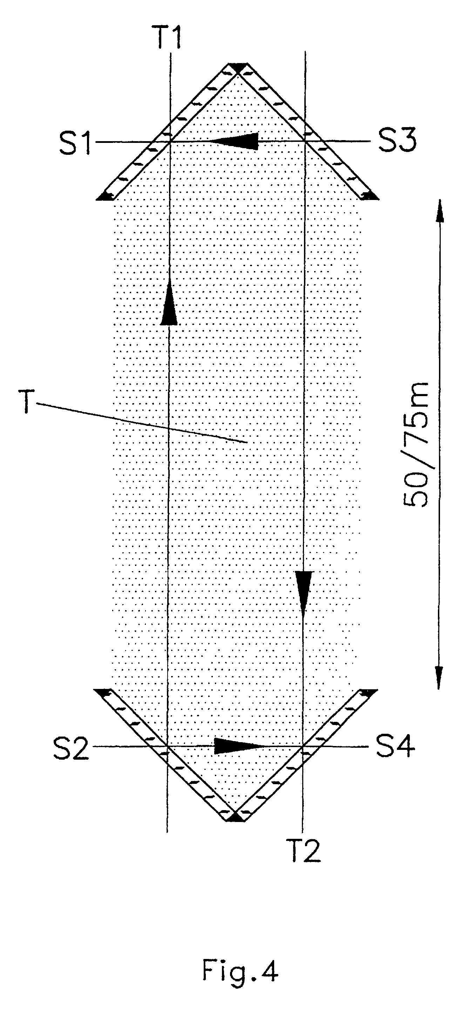

Anhand der schematischen Darstellung in Figur 4 gelten folgende Beziehungen:

| | |
|---|---|
| T | = atmosphärische Transmission (gesuchte Größe) |
| T1 | = Transmissionsmessung in der 1. Meßstrecke (beinhaltet S1 und S2) |
| T2 | = Transmissionsmessung in der 2. Meßstrecke (beinhaltet S3 und S4) |
| S1 | |
| S2 | |
| S3 | |
| S4 | = Scheibenverschmutzungswert von Scheiben 1, 2, 3, 4 |

V1 = S2 * S4 = Verschmutzungmessung 1

V2 = S1 * S3 Verschmutzungsmessung 2

Diese vier Werte T1, T2, V1 und V2 ermöglichen es nun, die Scheibenverschmutzung herauszurechnen. Was bleibt, ist die Spannung, die der tatsächlichen Transmission T entspricht.

Die nun folgenden mathematischen Zusammenhänge belegen die vorangegangene Behauptung: aus

$$T1 = T*S1*S2 \quad \text{und} \quad T2 = T*S3*S4$$

folgt

$$T = \sqrt{\frac{T1*T2}{S1*S2*S3*S4}} = \sqrt{\frac{T1*T2}{V1*V2}}$$

Als Transmissionsmeßwerte beziehungsweise Scheibenverschmutzungswerte werden jeweils normierte Spannungswerte der entsprechenden Empfänger benutzt. Die Kalibrierung erfolgt unter möglichst idealen Sichtbedingungen. Mit der erfindungsgemäßen Vorrichtung ist dann die atmosphärische Transmission, unabhängig von der Scheibenverschmutzung, unmittelbar abzulesen.

**Patentansprüche**

1. Sichtweitenmessgerät mit mindestens einem Referenzstrahl und mit mindestens einem Hauptstrahlengang, wobei jedem gesendeten Hauptstrahl und jedem empfangenen Hauptstrahl jeweils ein V-förmiges Fenster vorgeordnet ist, **dadurch gekennzeichnet, dass**

   - jeweils der gesendete Hauptstrahl durch den einen Schenkel des V-förmigen Fensters austritt und jeweils der empfangene Hauptstrahl durch den anderen Schenkel des selbigen V-förmigen Fensters wieder eintritt,

   - jeder Referenzstrahl derartig ausgebildet ist, dass er für jedes Fenster sowohl den Scheibenbereich des gesendeten wie auch den Scheibenbereich des empfangenen Hauptstrahles durchdringt.

2. Sichtweitenmessgerät mit einem Referenzstrahl und mit einem Hauptstrahlengang, wobei dem gesendeten Hauptstrahl und dem empfangenen Hauptstrahl jeweils ein V-förmiges Fenster vorgeordnet ist, **dadurch gekennzeichnet, dass**

   - die Fenster nebeneinander angeordnet sind und ungefähr gleich ausgerichtet sind,

- der gesendete Hauptstrahl durch den einen Schenkel des einen V-förmigen Fensters austritt,
- der empfangene Hauptstrahl durch den anderen Schenkel des weiteren Fensters eintritt,
- für beide Fenster der Referenzstrahl verwendet wird, wobei zwischen den Fenstern eine Wand mit einem Filter für die Wellenlänge des Referenzstrahlenganges vorgesehen ist und sich diese Wellenlänge von der ausgesendeten Wellenlänge des Hauptstrahlenganges unterscheidet,
- der Referenzstrahl derartig ausgebildet ist, dass er beide Schenkel beider Fenster durchdringt.

## Claims

1. Visual range measuring device with at least one reference beam and with at least one main beam path, wherein a V-shaped window is disposed respectively before each transmitted main beam and before each received main beam, **characterised in that**:

    - in each case the transmitted main beam exits through one arm of the V-shaped window and in each case the received main beam enters again through the other arm of the same V-shaped window,
    - each reference beam is formed in such a way that for each window it passes through not only the lens region of the transmitted main beam but also the lens region of the received main beam.

2. Visual range measuring device with a reference beam and with a main beam path, wherein a V-shaped window is disposed respectively before the transmitted main beam and before the received main beam, **characterised in that**:

    - the windows are disposed adjacent to one another and have approximately the same orientation,
    - the transmitted main beam exits through one arm of a V-shaped window,
    - the received main beam enters through the other arm of the further window,
    - the reference beam is used for both windows, wherein a wall with a filter for the wavelength of the reference beam path is provided between the windows and this wavelength differs from the transmitted wavelength of the main beam path,
    - the reference beam is formed in such a way that it passes through both arms of both windows.

## Revendications

1. Appareil de mesure de la distance de visibilité avec au moins un rayon de référence et avec au moins un faisceau de rayons principal, en amont de chaque rayon principal émis et de chaque rayon principal reçu étant disposée une fenêtre en V, **caractérisé en ce que**

    - le rayon principal émis ressort par une branche de la fenêtre en V et le rayon principal reçu entre à nouveau par l'autre branche de la même fenêtre en V,
    - chaque rayon de référence est conformé de manière que pour chaque fenêtre il traverse aussi bien la zone de vitre du rayon principal émis que la zone de vitre du rayon principal reçu.

2. Appareil de mesure de la distance de visibilité avec au moins un rayon de référence et avec au moins un faisceau de rayons principal, en amont de chaque rayon principal émis et de chaque rayon principal reçu étant disposée une fenêtre en V, **caractérisé en ce que**

    - les fenêtres sont disposées côte à côte et orientées à peu près de manière identique,
    - le rayon principal émis ressort par une branche d'une fenêtre en V,
    - le rayon principal reçu entre par l'autre branche de l'autre fenêtre,
    - pour les deux fenêtres on utilise le rayon de référence, entre les fenêtres étant prévue une paroi avec un filtre pour la longueur d'onde du faisceau de rayons de référence et cette longueur d'onde étant différente de la longueur d'onde émise du faisceau de rayons principal,
    - le rayon de référence est conformé de manière à traverser les deux branches des deux fenêtres.

Fig.1

Fig.2

Fig.3

Fig.4